Europäisches Patentamt

European Patent Office

Office européen des brevets

(11) Veröffentlichungsnummer : **0 204 206**
**B1**

(12) **EUROPÄISCHE PATENTSCHRIFT**

(45) Veröffentlichungstag der Patentschrift :
**15.03.89**

(51) Int. Cl.⁴ : **G 21 C 19/06**, G 21 C 19/40

(21) Anmeldenummer : **86106827.8**

(22) Anmeldetag : **20.05.86**

(54) **Lagergestell für längliche Brennelemente von Kernreaktoren.**

(30) Priorität : **03.06.85 DE 3519882**

(43) Veröffentlichungstag der Anmeldung :
**10.12.86 Patentblatt 86/50**

(45) Bekanntmachung des Hinweises auf die Patenterteilung : **15.03.89 Patentblatt 89/11**

(84) Benannte Vertragsstaaten :
**CH DE FR LI**

(56) Entgegenhaltungen :
**EP–A– 0 023 742**
**EP–A– 0 057 752**
**DE–A– 3 221 810**
**FR–A– 2 422 230**
**FR–A– 2 462 765**

(73) Patentinhaber : **Siemens Aktiengesellschaft Berlin und München**
**Wittelsbacherplatz 2**
**D-8000 München 2 (DE)**

(72) Erfinder : **Ristow, Ulrich**
**Am Trieb 13**
**D-6078 Neu-Isenburg (DE)**
Erfinder : **Krainer, Franz**
**Tucholskystrasse 5**
**D-6000 Frankfurt 70 (DE)**
Erfinder : **Haase, Walter**
**Bergwerkstrasse 14**
**D-8757 Karlstein (DE)**

EP 0 204 206 B1

**Beschreibung**

Die Erfindung betrifft ein Lagergestell für längliche Brennelemente von Kernreaktoren mit einer Grundplatte, einem darüberliegenden Gitterverband und mit dazwischen liegenden vertikalen Schächten aus neutronenabsorbierendem Material, die die Brennelemente mit einem ihnen angepaßten Querschnitt umschließen und an der Grundplatte mit Spannankern befestigt sind, die in Ausnehmungen in den Schächten greifen.

Bei einer solchen, aus der FR-A 2 422 230 bekannten Befestigung liegen die Spannanker praktisch vollständig zwischen zwei benachbarten Schächten, in deren Ausnehmungen sie von außen hineingreifen. Der Zwischenraum zwischen den Schächten nimmt jedenfalls die zur Befestigung notwendigen Spannschrauben auf. Dadurch wird der Abstand zwischen zwei benachbarten Schächten verhältnismäßig groß.

Die Erfindung geht von der Aufgabe aus, den Platz für ein Brennelementlagergestell möglichst klein zu machen. Insbesondere soll der Abstand zwischen benachbarten Schächten nicht größer sein als aufgrund der Kritikalitätsbedingungen nötig ist.

Die Lösung der vorgenannten Aufgabe besteht nach der Erfindung darin, daß die Spannanker durch die Ausnehmungen hindurch in den Innenraum der Schächte ragen und dort mit der Grundplatte verschraubt sind.

Bei der Erfindung ist für die Befestigung der Schächte im Gegensatz zum Bekannten kein zusätzlicher Raum erforderlich. Erstaunlicherweise hat sich nämlich gezeigt, daß im Bereich der sogenannten Fußstücke von üblichen Brennelementen auch in Schächten, die die Brennelemente eng umschließen, noch der zur Verschraubung von Spannankern notwendige Raum gefunden werden kann. Die Schächte können dann bis auf den geringen, durch die Kritikalität geforderten Abstand aneinandergerückt werden, der zum Beispiel durch Distanzstücke leicht sichergestellt werden kann.

Die Erfindung wird vorteilhaft so ausgeführt, daß die Spannanker mit einem im Inneren der Schächte liegenden Klotz eine Abstützung und/oder Zentrierung für die Brennelemente bilden. Man erspart dann besondere Bauteile, die beim Bekannten für das Halten und Führen der Brennelemente benötigt werden.

Die Erfindung kann auch so ausgeführt werden, daß ein einzelner Spannanker in die Ausnehmung zweier benachbarter Schächte greift. Dabei ist der Spannanker aber im Gegensatz zu der FR-A 2 422 230 symmetrisch im Innenraum jedes der beiden Schächte mit der Grundplatte verschraubt. Auch hier können also die benachbarten Schächte beliebig nah aneinandergerückt sein. Außerdem ist diese symmetrische Ausführung der Spannanker besonders günstig in bezug auf die Belastung von Spannschrauben usw.

Zur näheren Erläuterung der Erfindung wird anhand der Zeichnung ein Ausführungsbeispiel mit weiteren Einzelheiten beschreiben. Dabei zeigt die

Fig. 1 ein Gestell nach der Erfindung in einer Seitenansicht, die

Fig. 2 in etwas größerem Maßstab die Befestigung zweier benachbarter Schächte in einer Seitenansicht, und die Fig. 3 eine zu der Fig. 2 senkrechte Seitenansicht.

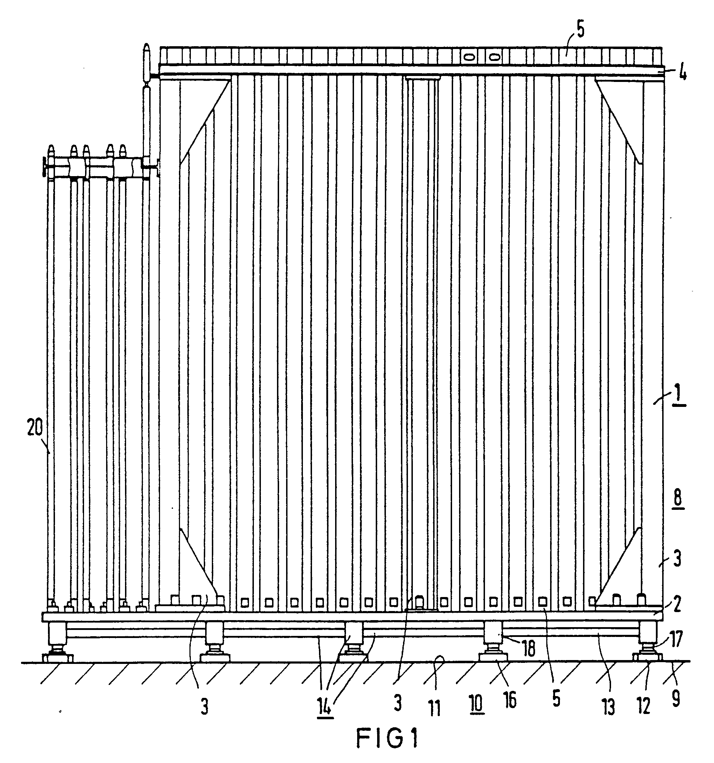

Das in Fig. 1 dargestellte Gestell dient zur Aufnahme von Brennelementen für Druck- oder Siedewasserreaktoren, wenn diese nach dem Einsatz im Reaktor, also in « verbrauchtem » Zustand, zum Abklingen gelagert werden, bevor ein Abtransport erfolgt. Das Gestell 1 umfaßt eine Grundplatte 2, an der Stützeinrichtungen 3 befestigt sind. Die Stützeinrichtungen 3 tragen einen oberen Gitterverband 4. Aus diesem ragen Schächte 5 heraus, die sich durch das Gestell bis zur Grundplatte 2 erstrecken. Die Schächte 5 bestehen aus neutronenabsorbierendem Material, zum Beispiel aus Borstahl, und nehmen mit ihren glatten, einen sechseckigen Querschnitt bildenden Wänden 6 die einzelnen Brennelemente auf, so daß deren horizontale Lage mit geringem Spiel festgelegt ist. Ausnehmungen 7 in den Wänden 6 der Schächte 5 dienen zur Befestigung, wie später näher erläutert wird.

Das Lagergestell 1 wird üblicherweise unter Wasser aufgestellt. Zu diesem Zweck steht es in einem Brennelement-Lagerbecken 8, von dem nur der Boden 9 dargestellt ist. Der Boden ist in Form eines Betonbauwerks 10 ausgeführt, der auf seiner das Becken begrenzenden Innenseite eine Metallauskleidung 11 (Liner) trägt.

Auf dem Liner 11 stützen sich Füße 12 ab, die mit horizontal verlaufenden Stegen 13 zu einem Füßerost 14 verbunden sind. Die Füße 12 umfassen Anschweißbutzen 16, die mit dem Liner 11 verschweißt sind, und Bolzen 17, die als vertikale Fußstücke auf den Anschweißbutzen 16 ruhen und in Rohre 18 greifen, an denen die Stege 13 befestigt sind.

Bei dem Ausführungsbeispiel nach Fig. 1 ist die Grundplatte 2 und der Füßerost 14 auch Träger für eine Ablage 20, die auf der in Fig. 1 linken Seite am Gestell 1 befestigt ist und zur Aufnahme von Steuerstäben oder dergleichen dient.

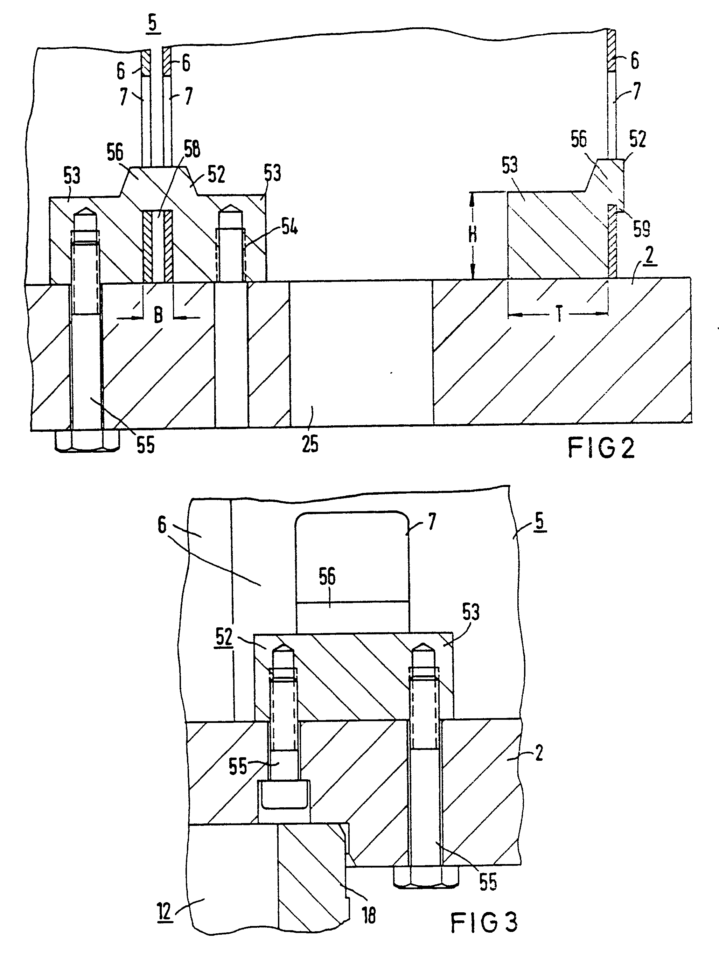

Die Fig. 2 zeigt, daß die Schächte 5 mit Spannankern 52 an die Grundplatte 2 angebracht sind. Die Spannanker 52 umfassen quaderförmige Metallklötze 53, die Gewindebohrungen 54 zur Aufnahme von Spannschrauben 55 besitzen. Mit den Spannschrauben 55, die zum Beispiel ein Gewinde M8 haben, werden die Metallklötze 53 gegen die Grundplatte 2 gepreßt. Dabei greifen sie mit Haken 56 in die Ausnehmungen 7 der Schächte 5 und ziehen diese ebenfalls gegen die Grundplatte 2.

Die Spannanker 52 und die Haken 56 dienen zugleich zur seitlichen Distanzierung der Schächte 5. Dabei gibt es zwei unterschiedliche Ausführungsformen. Bei dem in Fig. 2 links dargestellten Spannanker sind zwei Metallklötze 53 durch den Haken 56 zu einem U-förmigen Körper zusammengefügt. Die Breite B des Zwischenraumes 58 in den Klötzen 53 bestimmt den Abstand der Wände 6 benachbarter Schächte 5 voneinander. Der Abstand kann, wie die Fig. 2 zeigt, beliebig klein gemacht werden.

Bei dem auf der rechten Seite der Fig. 2 dargestellten Ausführungsbeispiel erstreckt sich der Haken 56 nur über die Wandstärke der Wände 6. Ein nach unter weisender Fortsatz 59 hält die am Rand gelegenen Schächte fest, ohne daß außerhalb der Schächte Platz benötigt wird.

Die Höhe H und die in das Schachtinnere ragende Tiefe T der Klötze 53 ist so gewählt, daß die Spannanker 52 zugleich zur Zentrierung der nicht dargestellten Brennelementfüße dienen. Deshalb wird mit der neuen Befestigung nicht nur ein geringer Platzbedarf des Lagergestells erreicht, sondern auch eine Einsparung zusätzlicher Bauteile, mit denen die Brennelemente sonst abgestützt und zentriert werden, so daß sie mitten in den Schächten 5 sitzen und durch Bohrungen 25 gut mit Kühlmittel beaufschlagt werden können.

In Fig. 3 ist zu sehen, daß die Breite der Klötze 53 der Spannanker 52 größer sein kann als die Breite der Ausnehmungen 7 in den Wänden 6. Der Hakenbereich 56 der Spannanker ist bei diesem Ausführungsbeispiel nur etwa halb so breit wie der Klotz 53. Außerdem ist in Fig. 3 zu sehen, daß die Spannschrauben 55 an den Stellen des Lagergestells, an denen die Rohre 18 der Füße 12 in die Grundplatte 2 eingelassen sind, kürzer ausgebildet sind, so daß sie in dem verbleibendem Zwischenraum zwischen der Oberseite des Rohres 18 und der Oberseite der Grundplatte 2 versenkt angeordnet sind und den für die Befestigung der Spannanker 52 notwendigen Halt finden.

## Patentansprüche

1. Lagergestell (1) für längliche Brennelemente von Kernreaktoren mit einer Grundplatte (2), einem darüberliegenden Gitterverband (4) und mit dazwischen liegenden vertikalen Schächten (5) aus neutronenabsorbierendem Material, die die Brennelemente mit einem ihnen angepaßten Querschnitt umschließen und an der Grundplatte mit Spannankern (52) befestigt sind, die in Ausnehmungen (7) in den Schächten greifen, dadurch gekennzeichnet, daß die Spannanker (52) durch die Ausnehmungen (7) hindurch in den Innenraum der Schächte (5) ragen und dort mit der Grundplatte (2) verschraubt sind.

2. Lagergestell nach Anspruch 1, dadurch gekennzeichnet, daß die Spannanker (52) mit einem im Inneren der Schächte (5) liegenden Klotz (53) eine Abstützung und/oder Zentrierung für die Brennelemente bilden.

3. Lagergestell nach Anspruch 1 oder 2, bei dem ein Spannanker (52) in die Ausnehmungen (7) zweier benachbarter Schächte greift, dadurch gekennzeichnet, daß der Spannanker (52) symmetrisch im Innenraum jedes der beiden Schächte (5) mit der Grundplatte (2) verschraubt ist.

## Claims

1. Storage stand (1) for oblong fuel elements of nuclear reactors with a base plate (2), a grid fastening (4) lying over the storage stand and with vertical shafts (5), of neutron-absorbing material, lying between the base plate and the grid fastening, the shafts enclosing the fuel elements with a cross-section suited to them and being fastened on to the base plate with clamping stays (52) which extend into the shafts in openings (7), characterized in that the clamping stays (52) project through the openings (7) into the interior of the shafts (5) and are screwed together there with the base plate (2).

2. Storage stand according to claim 1, characterized in that the clamping stays (52), with a block (53) lying in the interior of the shafts (5), form a support and/or centering for the fuel elements.

3. Storage stand according to claim 1 or 2, whereby a clamping stay (52) extends into the openings (7) of two adjacent shafts, characterized in that the clamping stay (52) is symmetrically screwed together with the base plate (2) in the interior of each of the two shafts (5).

## Revendications

1. Casier de stockage (1) d'assemblages combustibles oblongs de réacteurs nucléaires, comprenant une plaque de base (2), un treillis (4) se trouvant au-dessus, et des puits (5) verticaux qui sont disposés entre eux, qui sont en matériau absorbant les neutrons, qui entourent les assemblages combustibles en ayant une section transversale qui leur est adaptée et qui sont fixés à la plaque de base par des tirants de blocage (52) qui pénètrent dans des évidements (7) ménagés dans les puits, caractérisé en ce que, les tirants de blocage (52) font saillie, en passant à travers les évidements (7), à l'intérieur des puits (5) et y sont boulonnés à la plaque de base (2).

2. Casier de stockage suivant la revendication 1, caractérisé en ce que, les tirants de blocage (52) forment, avec un bloc (53) se trouvant à l'intérieur des puis (5), un appui et/ou un centrage pour les assemblages combustibles.

3. Casier de stockage suivant la revendication 1 ou 2, dans lequel un tirant de blocage (52) pénètre dans les évidements (7) de deux puits voisins, caractérisé en ce que, le tirant de blocage (52) est boulonné symétriquement à l'intérieur de chacun des deux puits (5) à la plaque de base (2).

FIG 1

FIG 2

FIG 3